# EUROPEAN PATENT SPECIFICATION

(11) **EP 1 681 467 B1**
(45) Date of publication and mention of the grant of the patent: **11.05.2016**
(21) Application number: 05107350.0
(22) Date of filing: 10.08.2005
(51) Int. Cl.: F04C 18/356, F04C 23/00, F01C 21/08, F01C 21/10

(54) **Multi-stage rotary compressor**
Mehrstufiger Drehkolbenverdichter
Compresseur rotatif multi-étages

(30) Priority: 18.01.2005 KR 2005004716
(43) Date of publication of application: 19.07.2006
(73) Proprietor: Samsung Electronics Co., Ltd., Suwon-si, Gyeonggi-do, 443-742 (KR)
(72) Inventor: CHO, Sung Oug, Gwangjin-gu, Seoul (KR)
(74) Representative: Grey, Ian Michael

(56) References cited:
- PATENT ABSTRACTS OF JAPAN vol. 015, no. 069 (M-1083), 19 February 1991 (1991-02-19) -& JP 02 294587 A (MATSUSHITA ELECTRIC IND CO LTD), 5 December 1990 (1990-12-05)
- PATENT ABSTRACTS OF JAPAN vol. 2003, no. 12, 5 December 2003 (2003-12-05) -& JP 2004 019599 A (SANYO ELECTRIC CO LTD), 22 January 2004 (2004-01-22)

## Description

The present invention relates to a multi-stage rotary compressor comprising a sealed housing, a first compressing unit in said housing for compressing a gas to an intermediate pressure and, a second compressing unit in said housing for compressing gas compressed to said intermediate pressure to a higher pressure, the first and second compressing units comprising a compression cylinder, a roller that rotates eccentrically within the compression cylinder and, a vane that contacts the roller and reciprocates in a radial direction as the roller rotates to divide the cylinder into a suction space and a discharge space, the vane being exposed at one end to the pressure in the housing. Such multistage rotary compressors are known from Patent Abstracts of Japan, vol. 015, No. 069 (M-1083) 19th February 1991 (JP02 294587A), which can be considered as closest prior art, and Patent Abstracts of Japan, vol. 012, 5^{th} December 2003 (JP 2004 019599A).

A multi-stage rotary compressor, as disclosed in Japanese Patent Publication No. 2004-19599 (published on January 22, 2004), includes a lower first compression chamber and an upper second compression chamber. In operation, a refrigerant gas is primarily compressed in the first compression chamber to an intermediate pressure, and secondarily compressed in the second compression chamber to a higher pressure while successively passing through the first and second compression chambers, thereby being discharged into a hermetic casing of the compressor in a substantially high pressure state.

The rotary compressor further includes first and second rollers that eccentrically rotate in the respective compression chambers, first and second vanes each serving to sectionalize an associated one of the compression chambers into a suction space and a discharge space while reciprocating in a radial direction of the associated compression chamber according to a rotation of the first or second roller, and first and second vane springs to press the vanes toward the rollers.

By virtue of the elasticity of the vane springs and the high interior pressure of the hermetic casing, the first and second vanes are kept in close contact with outer circumferences of the first and second rollers, respectively, when they are pressed inward in the respective compression chambers to compress a refrigerant.

However, the above described multi-stage rotary compressor experiences a pressure difference between the interior of the first compression chamber and the interior of the hermetic casing because, during a compression operation, the second compression chamber and the hermetic casing are kept at high interior pressures, whereas the first compression chamber is kept at an intermediate interior pressure below the interior pressure of the hermetic casing. The pressure difference causes the first vane to press the outer circumference of the first roller with an unnecessarily large force, resulting in an increased driving load.

Thereby, although the second vane presses the second roller with a moderate force because there exists no noticeable pressure difference between the second compression chamber and the hermetic casing, the substantial pressure difference between the first compression chamber and the hermetic casing problematically increases a press force of the first vane against the outer circumference of the first roller, resulting in much frictional wear between the first vane and the first roller. Further, the increased driving load incurs a loss of energy.

Another problem of the multi-stage rotary compressor is that the interior pressure of the first compression chamber rises abruptly (i.e. above the intermediate pressure) if a refrigerant liquid is introduced into the first compression chamber during an initial operation. Because the refrigerant, passed by the first compression chamber, is again compressed in the second compression chamber rather than discharged directly into the hermetic casing, the abrupt pressure rising generates an overload in the compressor, hindering a smooth starting thereof.

The present invention seeks to overcome or alleviate the above-described problems and provide a multi-stage rotary compressor that reduces a pressure difference between the interior of a first compression chamber and a space around the first compression chamber to achieve a reduced friction incurred by a first vane, thus resulting in a negligible driving load.

A multi-stage rotary compressor according to the present invention is characterised by a partition element between the first and second compressing units to separate the housing into first and second pressure chambers respectively, the first compressing unit being located in said first pressure chamber and the second compressing unit being located in said second pressure chamber so that, when the compressor is in use, the first pressure chamber is maintained at a pressure substantially equal to said intermediate pressure, the second pressure chamber is maintained at a pressure substantially equal to said higher pressure and the first vane is exposed at one end to the pressure in the first pressure chamber and the second vane is exposed at one end to the pressure in the second compression chamber.

Preferably, the multistage rotary compressor further comprises a pressure adjustment conduit in the partition element and a pressure adjustment valve associated with the conduit to allow gas to flow from the first pressure chamber into the second pressure chamber when the pressure in the first pressure chamber exceeds a predetermined pressure.

In one embodiment, the multistage rotary compressor comprises an oil sump and a second partition element to partition the first pressure chamber from said oil sump.

A multistage rotary compressor may include a flow path between the second pressure chamber and the oil sump so that the oil sump is maintained at a pressure which is substantially equal to the pressure of the second pressure chamber.

Embodiments of the present invention will now be described, by way of example only, with reference to the accompanying drawings, in which:
Figure 1 is a vertical sectional view of a multi-stage rotary compressor consistent with an exemplary embodiment of the present invention;
Figure 2 is a cross sectional view taken along the line II-II' of Figure 1;
Figure 3 is a cross sectional view taken along the line III-III' of Figure 1; and
Figure 4 is a perspective view of a pressure adjustment valve provided in the multi-stage rotary compressor of Figure 1.

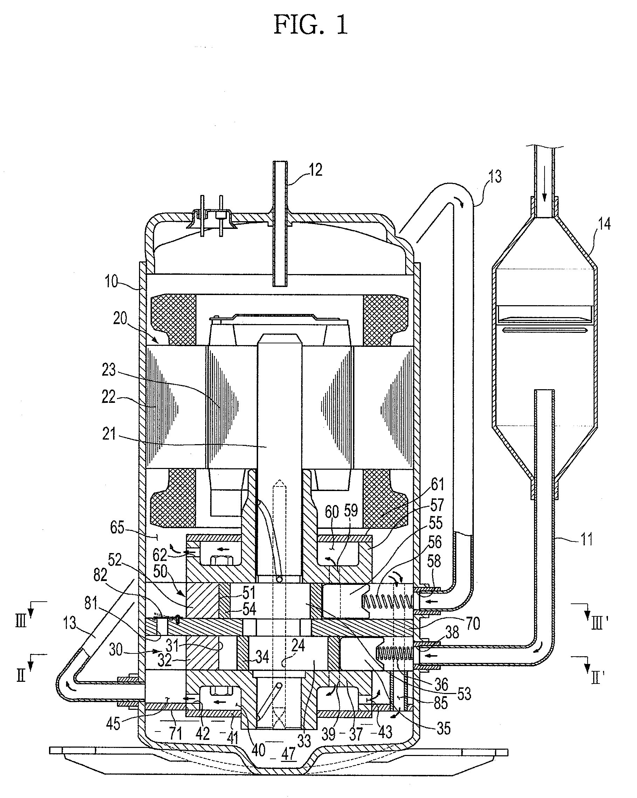

Referring to the drawings, Figure 1 is a vertical sectional view of a multi-stage rotary compressor consistent with an exemplary embodiment of the present invention. As shown in Figure 1, the multi-stage rotary compressor of the present invention includes a hermetic casing 10, a motor driving device 20 mounted in the upper portion of the hermetic casing 10 to generate a rotary force, and a refrigerant compressing device mounted in the lower portion of the hermetic casing 10 and connected to the motor driving device 20 via a rotary shaft 21.

The motor driving device 20 includes a cylindrical stator 22 fixed on an inner circumference of the hermetic casing 10, and a rotor 23 rotatably disposed in the stator 22 and coupled to the rotary shaft 21 at a hollow centre portion thereof.

The compressing device includes a first compressing unit 30 and a second compressing unit 50 located above the first compressing unit 30. The first compressing unit 30 primarily compresses a suction refrigerant, and the second compressing unit 50 secondarily compresses the compressed refrigerant from the first compressing unit 50 to a higher pressure than that at the first compressing unit 30.

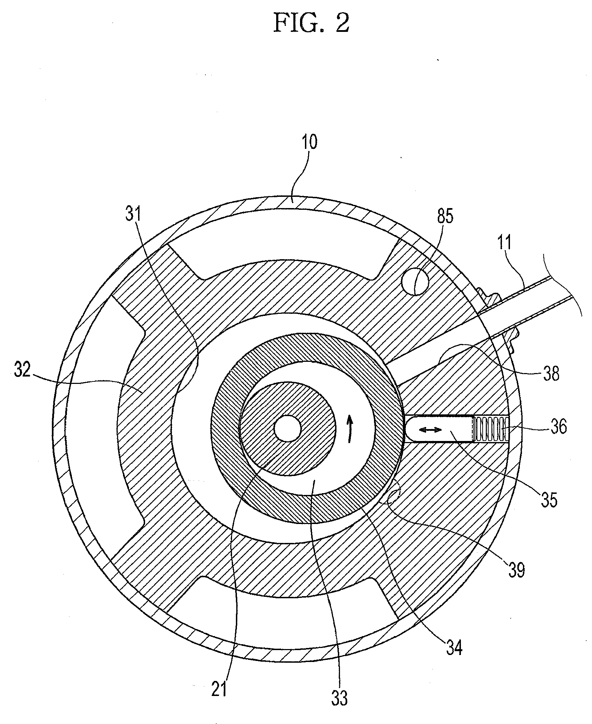

Referring to Figures 1 and 2, the first compressing unit 30 includes a first cylinder body 32 defining a cylindrical first compression chamber 31, and a first eccentric portion 33 provided around the rotary shaft 21 in the first compression chamber 31. In addition, a first roller 34 is rotatably coupled to an outer circumference of the first eccentric portion 33 to eccentrically rotate while coming into partial contact at an outer circumference thereof with an inner circumference of the first cylinder body 32 defining the first compression chamber 31. According to such eccentric rotation of the first roller 34, a first vane 35 reciprocates in a radial direction of the first compression chamber 31 to sectionalize the interior space of the first compression chamber 31 into a suction space and a discharge space. A first vane spring 36 presses the first vane 35 toward the first roller 34.

The first compressing unit 30 further includes a first support member 37 attached to a lower surface of the first cylinder body 32 to close an opened lower end of the first compression chamber 31 and rotatably support the rotary shaft 21. The first cylinder body 32 has a first suction port 38 for the connection of a refrigerant suction pipe 11, and the first support member 37 has a first discharge port 39 for the discharge of the refrigerant compressed in the first compression chamber 31. The first suction port 38 and the first discharge port 39 are located at opposite sides of the first vane 35. The first support member 37 has a first discharge chamber 40 provided in a lower region thereof to attenuate a noise and pulsation of the compressed refrigerant gas discharged via the first discharge port 39. A first cover 41 closes an opened lower end of the first discharge chamber 40. The first support member 37 further has a plurality of lateral through-holes 42 and 43 to communicate the first discharge chamber 40 with the interior of the hermetic casing 10.

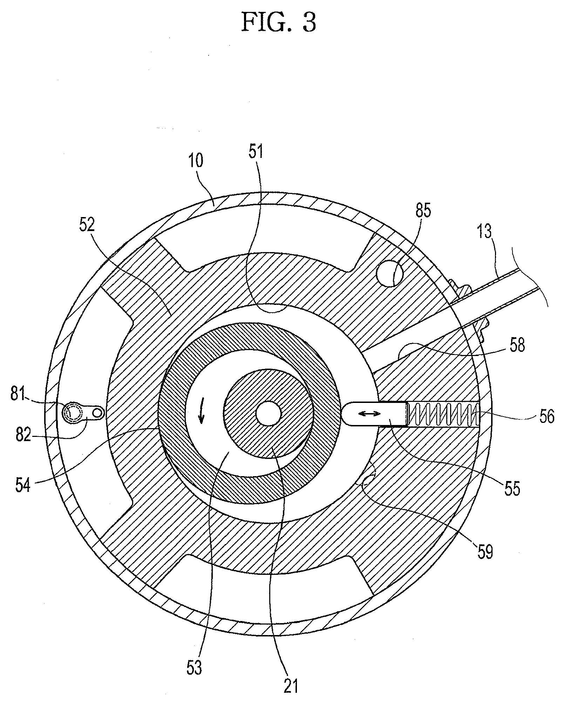

Referring Figures 1 and 3, the second compressing unit 50 includes a second cylinder body 52 defining a cylindrical second compression chamber 51, and a second eccentric portion 53 provided around the rotary shaft 21 in the second compression chamber 51. The second eccentric portion 53 has a phase angle of 180° with the first eccentric portion 33. In addition, a second roller 54 is rotatably coupled to an outer circumference of the second eccentric portion 53 to eccentrically rotate while coming into partial contact at an outer circumference thereof with an inner circumference of the second cylinder body 52 defining the second compression chamber 51. According to such eccentric rotation of the second roller 54, a second vane 55 reciprocates in a radial direction of the second compression chamber 51 to sectionalize the interior space of the second compression chamber 51 into a suction space and a discharge space. A second vane spring 56 presses the second vane 55 toward the second roller 54.

The second compressing unit 50 further includes a second support member 57 attached to an upper surface of the second cylinder body 52 to close an opened upper end of the second compression chamber 51 and rotatably support the rotary shaft 21. The second cylinder body 52 has a second suction port 58, and the second support member 57 has a second discharge port 59 for the discharge of the refrigerant compressed in the second compression chamber 51. The second suction port 58 and the second discharge port 59 are located at opposite sides of the second vane 55. The second support member 57 has a second discharge chamber 60 provided in an upper region thereof to attenuate a noise and pulsation of the compressed refrigerant gas discharged via the second discharge port 59. A second cover 61 closes an opened upper end of the second discharge chamber 60. The second support member 57 further has a lateral hole 62 to communicate the second discharge chamber 60 with the interior of the hermetic casing 10.

The first and second compressing units 30 and 50 are separated from each other by interposing a disk-shaped first partition 70 between the first and second cylinder bodies 32 and 52. This means that the first compression chamber 31 is separated from the second compression chamber 51. The disk-shaped first partition 70 is sized so that an outer periphery thereof comes into close contact with the inner circumference of the hermetic casing 10 in an air-tight manner, thereby dividing the interior space of the hermetic casing 10 into a lower first pressure chamber 45 and an upper second pressure chamber 65. The first pressure chamber 45 is separated from an oil sump 47 therebelow by means of a ring-shaped second partition 71 that is inserted between an outer circumference of the first support member 37 and the inner circumference of the hermetic casing 10. A connection pipe 13 is provided at the outside of the hermetic casing 10 to communicate the first pressure chamber 45 with the second suction port 58, thereby enabling the refrigerant gas of the first pressure chamber 45, compressed through the first compressing unit 30, to be supplied to the second suction port 58 of the second compressing unit 50. Also shown in Figure 1 is a discharge pipe 12 to finally discharge the high-pressure refrigerant gas within the second pressure chamber 65 to the outside, and an accumulator 14 installed at the refrigerant suction pipe 11.

The above described configuration is intended to supply the refrigerant gas, which is primarily compressed in the first compressing unit 30, to the second compressing unit 50 via the connection pipe 13 such that it is secondarily compressed to a higher pressure, and also intended to enable the high-pressure refrigerant gas, discharged from the second compressing unit 50 into the second pressure chamber 65, to be discharged from the discharge pipe 12 provided at an upper surface of the hermetic casing 10. Thereby, the first pressure chamber 45 around the first compressing unit 30 is kept at a discharge pressure of the first compressing unit 30, and the second pressure chamber 65 around the second compressing unit 50 is kept at a discharge pressure of the second compressing unit 50 that is higher than the discharge pressure of the first pressure chamber 45. Furthermore, the above described configuration is intended to exert the pressure of the first pressure chamber 45 on the first vane 35 and the pressure of the second pressure chamber 65 on the second vane 55. For this, each of the first and second vanes 35 and 55 is exposed at an end thereof facing the inner circumference of the hermetic casing 10 to the first pressure chamber 45 or second pressure chamber 65 to communicate with it. This is to substantially equalize the pressure of the first compression chamber 31 with the pressure of the first pressure chamber 45 outside the first compressing unit 30 to thereby prevent the first vane 35 from excessively pressing the outer circumference of the first roller 34 as well as substantially equalize the pressure of the second compression chamber 51 with the pressure of the second pressure chamber 65 outside the second compressing unit 50 to thereby prevent the second vane 55 from excessively pressing the outer circumference of the second roller 54.

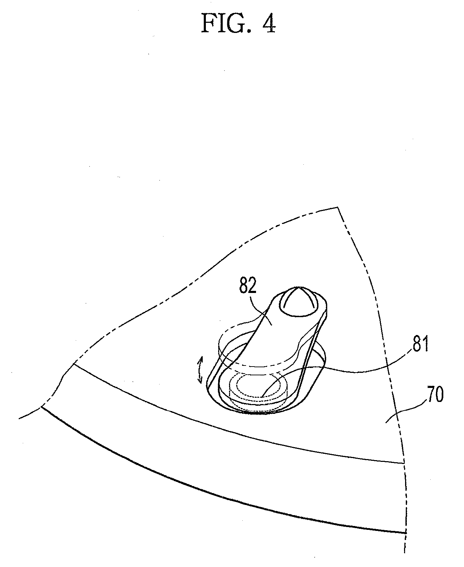

Referring to Figures 1 and 3, the first partition 70 has a pressure adjustment channel 81 to communicate the first pressure chamber 45 with the second pressure chamber 65. Such a pressure adjustment channel 81 allows a refrigerant gas to flow from the first pressure chamber 45 into the second pressure chamber 65 if the pressure of the first pressure chamber 45 rises above a preset pressure in an initial starting. The pressure adjustment channel 81 is provided with a pressure adjustment valve 82 that opens the pressure adjustment channel 81 when the pressure of the first pressure chamber 45 is more than the preset pressure and closes the pressure adjustment channel 81 when the pressure of the first pressure chamber 45 is less than the preset pressure. Referring to Figure 4, the pressure adjustment valve 82 is formed as a conventional reed valve that selectively opens an outlet of the pressure adjustment channel 81 at the side of the second pressure chamber 65 only when desired. Based on the elasticity of the pressure adjustment valve 82, the preset pressure of the first pressure chamber 45 is determined. This is to allow the pressure adjustment valve 82 to perform an opening operation only under the influence of the pressure of the first pressure chamber 45, thereby ensuring only one-way passage of the refrigerant gas from the first pressure chamber 45 to the second pressure chamber 65.

With the pressure adjustment means of the present invention as described above, when the pressure of the first compressing chamber 31 rises abruptly above the pressure of the second pressure chamber 65 because of a refrigerant liquid introduced into the first compressing chamber 31 in an initial operation of the compressor, a refrigerant gas of the first pressure chamber 45 flows into the second pressure chamber 65 through the pressure adjustment channel 81, thereby lowering a pressure of the first pressure chamber 45 down to that of the second pressure chamber 65. Such a pressure equalization function is effective to prevent an overload on the compressor and ensure a smooth starting thereof. Further, this eliminates a risk of friction between the first vane 35 and the first roller 34, which is conventionally incurred as the first vane 35 presses the first roller 34 excessively due to an abrupt pressure rising in the first pressure chamber 45.

Referring to Figure 1, the multi-stage rotary compressor consistent with the present invention includes an oil supply channel 24 defined in the rotary shaft 21 to enable oil of the oil sump 47 in the bottom region of the hermetic casing 10 to be supplied to frictional portions of the first and second compressing units 30 and 50 as a lubricant. A channel 85 is provided between the second pressure chamber 65 in the upper region of the hermetic casing 10 and the oil sump 47, in order to equalize the pressure of the oil sump 47 with the pressure of the second pressure chamber 65. As shown in Figures 1 to 3, the channel 85 is formed of a pipe extending successively through the first cylinder body 32, the first partition 70, the second cylinder body 52, the first pressure chamber 45 and the second partition 71. In this case, the channel 85 does not communicate between the first pressure chamber 45 and the oil sump 47.

By the use of the channel 85, the interior pressure of the oil sump 47 is able to be kept at the same high pressure as that of the second pressure chamber 65, thus permitting the oil to be smoothly supplied to the second compressing unit 50 having the same pressure as that of the oil sump 47 as well as the first compressing unit 30 having the pressure lower than that of the oil sump 47.

Hereinafter, the general operation of the multi-stage rotary compressor configured as stated above will be explained.

If the first and second compressing units 30 and 50 drive by power of the motor driving device 20, a refrigerant is suctioned into the first suction port 38 via the refrigerant suction pipe 11 and is primarily compressed while passing through the first compression chamber 31. The compressed refrigerant is discharged into the first pressure chamber 45 through the first discharge port 39 and the first discharge chamber 40. Thereby, the first pressure chamber 45 is kept at a discharge pressure of the first compressing unit 30.

Then, the refrigerant, inside the first pressure chamber 45, is suctioned to the second compressing unit 50 via the connection pipe 13 and is secondarily compressed to a higher pressure while passing through the second compression chamber 51. After that, the refrigerant is discharged into the second pressure chamber 65 in the upper region of the hermetic casing 10 through the second discharge port 59 and the second discharge chamber 60. Thereby, the second pressure chamber 65 is kept at a discharge pressure of the second compressing unit 50 that is higher than the pressure of the first pressure chamber 45, and the refrigerant is finally discharged from the second pressure chamber 65 to the outside via the discharge pipe 12 at the upper surface of the hermetic casing 10.

During the compressing operation as stated above, a pressure difference between the interior of the first compression chamber 31 and the first pressure chamber 45 outside the first compressing unit 30 is not large to thereby prevent the first vane 31 from excessively pressing the outer circumference of the first roller 34. Similarly, a pressure difference between the interior of the second compression chamber 51 and the second pressure chamber 65 outside the second compressing unit 50 is not large to thereby prevent the second vane 55 from excessively pressing the outer circumference of the second roller 54. Therefore, the compressor of the present invention has an advantage of a reduced driving load of the rotary shaft 21 as compared to a prior art compressor.

In the case of the oil sump 47, because the interior pressure thereof is kept at the same high pressure as that of the second pressure chamber 65, the oil stored in the oil sump 47 is able to be smoothly supplied to the first and second compressing units 30 and 50.

With the present invention, even if a refrigerant liquid enters the first compression chamber 31 in an initial operation of the compressor to cause an abrupt pressure rising of the first compressing unit 30 above the preset pressure and thus the pressure of the first pressure chamber 45 becomes higher than that of the second pressure chamber 65, it is easy to lower the pressure of the first pressure chamber 45 by discharging a refrigerant gas of the first pressure chamber 45 into the second pressure chamber 65 through the pressure adjustment channel 81. As a result, there exists no overload in the initial operation of the compressor, and a smooth starting of the compressor is possible.

As apparent from the above description, the present invention provides a multi-stage rotary compressor configured in such a manner that the interior space of a hermetic casing is divided into a first pressure chamber surrounding a first compressing unit and a second pressure chamber surrounding a second compressing unit. Such a configuration is effective to reduce pressure differences between the inside and outside of the first compressing unit and between the inside and outside of the second compressing unit, thereby achieving less friction between a first vane and a first roller and between a second vane and a second roller. As a result, the present invention can achieve a reduced driving load and an enhanced durability, as compared to a prior art multi-stage rotary compressor.

Further, the present invention is intended to discharge a refrigerant gas from the first pressure chamber into the second pressure chamber through a pressure adjustment channel when a pressure of the first compressing unit rises abruptly, enabling a pressure reduction of the first pressure chamber. This has the effect of preventing an excessive pressure rising of the first compressing unit, eliminating a malfunction risk of the compressor.

Furthermore, according to the present invention, an interior pressure of an oil sump is kept at a pressure of the second pressure chamber that is higher than that of the first pressure chamber, thereby enabling a smooth oil supply from the oil sump to the first and second compressing units.

Although embodiments of the present invention have been shown and described, it would be appreciated by those skilled in the art that changes may be made in this embodiment without departing from the claimed invention, the scope of which is defined in the claims.

## Claims

1. A multi-stage rotary compressor comprising a sealed housing (10), a first compressing unit (30) in said housing (10) for compressing a gas to an intermediate pressure and, a second compressing unit (50) in said housing for compressing gas compressed to said intermediate pressure to a higher pressure, the first and second compressing units (30, 50) comprising a compression cylinder (32, 52), a roller (34, 54) that rotates eccentrically within the compression cylinder (32, 52) and, a vane (35, 55) that contacts the roller (34, 54) and reciprocates in a radial direction as the roller (34, 54) rotates to divide the cylinder (32, 52) into a suction space and a discharge space, the vane (35, 55) being exposed at one end to the pressure in the housing (35, 55) **characterised by** a partition element (70) between the first and second compressing units (30, 50) to separate the housing into first and second pressure chambers (45, 65) respectively, the first compressing unit (30) being located in said first pressure chamber (45) and the second compressing unit (50) being located in said second pressure chamber (65) so that, when the compressor is in use, the first pressure chamber (45) is maintained at a pressure substantially equal to said intermediate pressure, the second pressure chamber (65) is maintained at a pressure substantially equal to said higher pressure and the first vane (35) is exposed at one end to the pressure in the first pressure chamber (45) and the second vane (55) is exposed at one end to the pressure in the second pressure chamber (65).

2. A multi-stage rotary compressor according to claim 1, comprising a pressure adjustment conduit (81)in the partition element (70) and a pressure adjustment valve (82) associated with the conduit (81) to allow gas to flow from the first pressure chamber (45) into the second pressure chamber (65) when the pressure in the first pressure chamber (45) exceeds a predetermined pressure.

3. A multi-stage rotary compressor according to claim 2, comprising an oil sump (47) and a second partition element (71) to partition the first pressure chamber (45) from said oil sump (47).

4. A multi-stage rotary compressor according to claim 3, including a flow path between the second pressure chamber (65) and the oil sump (47) so that the oil sump (47) is maintained at a pressure which is substantially equal to the pressure of the second pressure chamber (65).

## Patentansprüche

1. Mehrstufiger Drehkolbenverdichter, umfassend ein abgeschlossenes Gehäuse (10), eine erste Verdichtungseinheit (30) in dem Gehäuse (10) zum Verdichten eines Gases auf einen mittleren Druck und eine zweite Verdichtungseinheit (50) in dem Gehäuse zum Verdichten von auf den mittleren Druck verdichtetem Gas auf einen höheren Druck, wobei die erste und die zweite Verdichtungseinheit (30, 50) einen Verdichtungszylinder (32, 52), eine sich exzentrisch in dem Verdichtungszylinder (32, 52) drehende Walze (34, 54) und einen Schieber (35, 55), der die Walze (34, 54) berührt und sich in einer Radialrichtung hin- und herbewegt, wenn sich die Walze (34, 54) dreht, um den Zylinder (32, 52) in einen Saugraum und einen Druckraum zu teilen, umfassen, wobei der Schieber (35, 55) an einem Ende dem Druck in dem Gehäuse (35, 55) ausgesetzt ist, **gekennzeichnet durch** ein Trennelement (70) zwischen der ersten und der zweiten Verdichtungseinheit (30, 50) zum Trennen des Gehäuses in eine erste und eine zweite Druckkammer (45, 65), wobei sich die erste Verdichtungseinheit (30) in der ersten Druckkammer (45) befindet und sich die zweite Verdichtungseinheit (50) in der zweiten Druckkammer (65) befindet, sodass, wenn der Verdichter in Gebrauch ist, die erste Druckkammer (45) auf einem Druck gehalten wird, der im Wesentlichen gleich dem mittleren Druck ist, die zweite Druckkammer (65) auf einem Druck gehalten wird, der im Wesentlichen gleich dem höheren Druck ist und der erste Schieber (35) an einem Ende dem Druck in der ersten Druckkammer (45) ausgesetzt ist und der zweite Schieber (55) an einem Ende dem Druck in der zweiten Druckkammer (65) ausgesetzt ist.

2. Mehrstufiger Drehkolbenverdichter nach Anspruch 1, umfassend eine Druckausgleichsleitung (81) in dem Trennelement (70) und ein mit der Leitung (81) assoziiertes Druckausgleichsventil (82), um Gas von der ersten Druckkammer (45) in die zweite Druckkammer (65) strömen zu lassen, wenn der Druck in der ersten Druckkammer (45) einen vorherbestimmten Druck übersteigt.

3. Mehrstufiger Drehkolbenverdichter nach Anspruch 2, umfassend einen Ölsumpf (47) und ein zweites Trennelement (71) zum Trennen der ersten Druckkammer (45) von dem Ölsumpf (47).

4. Mehrstufiger Drehkolbenverdichter nach Anspruch 3, umfassend einen Strömungspfad zwischen der zweiten Druckkammer (65) und dem Ölsumpf (47), sodass der Ölsumpf (47) auf einem Druck gehalten wird, der im Wesentlichen gleich dem Druck der zweiten Druckkammer (65) ist.

## Revendications

1. Compresseur rotatif multi-étages comportant un carter scellé (10), une première unité de compression (30) dans ledit carter (10) servant à comprimer un gaz jusqu'à une pression intermédiaire et, une deuxième unité de compression (50) dans ledit carter servant à comprimer le gaz comprimé à ladite pression intermédiaire jusqu'à une pression supérieure, les première et deuxième unités de compression (30, 50) comportant un cylindre compresseur (32, 52), un rouleau (34, 54) qui tourne de manière excentrée à l'intérieur du cylindre compresseur (32, 52) et, une aube (35, 55) qui entre en contact avec le rouleau (34, 54) et qui s'anime d'un mouvement de va-et-vient dans une direction radiale alors que le rouleau (34, 54) tourne pour diviser le cylindre (32, 52) en un espace d'aspiration et un espace de décharge, l'aube (35, 55) étant exposée au niveau d'une extrémité à la pression dans le carter (35, 55) **caractérisé par** un élément de séparation (70) entre les première et deuxième unités de compression (30, 50) pour séparer le carter en des première et deuxième chambres de pression (45, 65) respectivement, la première unité de compression (30) étant située dans ladite première chambre de pression (45) et la deuxième unité de compression (50) étant située dans ladite deuxième chambre de pression (65) de telle sorte que, quand le compresseur est utilisé, la première chambre de pression (45) est maintenue à une pression sensiblement égale à ladite pression intermédiaire, la deuxième chambre de pression (65) est maintenue à une pression sensiblement égale à ladite pression supérieure et la première aube (35) est exposée au niveau d'une extrémité à la pression dans la première chambre de pression (45) et la deuxième aube (55) est exposée au niveau d'une extrémité à la pression dans la deuxième chambre de pression (65).

2. Compresseur rotatif multi-étages selon la revendication 1, comportant une conduite de réglage de pression (81) dans l'élément de séparation (70) et une soupape de réglage de pression (82) associée à la conduite (81) pour permettre au gaz de s'écouler de la première chambre de pression (45) jusque dans la deuxième chambre de pression (65) quand la pression dans la première chambre de pression (45) est supérieure à une pression prédéterminée.

3. Compresseur rotatif multi-étages selon la revendication 2, comportant une cuvette d'huile (47) et un deuxième élément de séparation (71) servant à séparer la première chambre de pression (45) de ladite cuvette d'huile (47).

4. Compresseur rotatif multi-étages selon la revendication 3, comprenant une trajectoire d'écoulement entre la deuxième chambre de pression (65) et la cuvette d'huile (47) de telle sorte que la cuvette d'huile (47) est maintenue à une pression qui est sensiblement égale à la pression de la deuxième chambre de pression (65).
